# EUROPEAN PATENT APPLICATION

(11) **EP 4 679 267 A1**
(43) Date of publication of application: **14.01.2026**
(21) Application number: 24766514.4
(22) Date of filing: 07.03.2024
(51) Int. Cl.: G06F 9/451, G06F 16/242

(54) **MEDIA CONTENT COLLECTION METHOD AND APPARATUS, AND DEVICE, READABLE STORAGE MEDIUM AND PRODUCT**

(30) Priority: 07.03.2023 CN 202310220132
(71) Applicant: Beijing Zitiao Network Technology Co., Ltd., Beijing 100190 (CN)
(72) Inventor: XU, Qi, Beijing 100028 (CN); ZHANG, Nuomeng, Beijing 100028 (CN)
(74) Representative: Isarpatent
(86) International application number: PCT/CN2024/080603
(87) International publication number: WO 2024/183800

(57) **Abstract**

Disclosed in the embodiments of the present disclosure are a media content acquisition method and apparatus, and a device, a readable storage medium and a product. The method comprises: displaying a media content acquisition page in response to a media content acquisition operation, wherein a preset display area of the media content acquisition page includes an effect presentation bar in an inactivated state, the effect presentation bar including at least one effect content displayed in a preset target layout; switching the effect presentation bar from the inactivated state to an activated state in response to a preset trigger operation by a user on the effect presentation bar; determining a target effect currently selected by the user; and performing the media content acquisition operation based on the target effect.

## Description

### CROSS-REFERENCE TO RELATED APPLICATIONS

The present application is based on and claims priority of the Chinese Patent Application No. 202310220132.4, filed on March 07, 2023, the disclosure of which is incorporated by reference herein in its entirety.

### TECHNICAL FIELD

Embodiments of the present disclosure relate to the technical field of interface interaction, and more particularly to a media content acquisition method and apparatus, a device, a readable storage medium and a product.

### BACKGROUND

When users perform media content acquisition operation in application software, they often need to use effects to obtain better shooting results. In the related art, the effect selection and effects interaction are often complicated to operate, and the interaction is relatively simple, which is inconvenient for users to use, resulting in a poor user experience.

### SUMMARY

The embodiments of the present disclosure provide a media content acquisition method and apparatus, a device, a readable storage medium and a product.

In a first aspect, an embodiment of the present disclosure provides a media content acquisition method, comprising:
displaying a media content acquisition page in response to a media content acquisition operation, wherein a preset display area of the media content acquisition page includes an effect presentation bar in an inactivated state, the effect presentation bar including at least one effect content displayed in a preset target layout;
switching the effect presentation bar from the inactivated state to an activated state in response to a preset trigger operation by a user on the effect presentation bar;
determining a target effect currently selected by the user; and
performing the media content acquisition operation based on the target effect.

In a second aspect, an embodiment of the present disclosure provides a media content acquisition apparatus, comprising:
a display module, configured to display a media content acquisition page in response to a media content acquisition operation, wherein a preset display area of the media content acquisition page includes an effect presentation bar in an inactivated state, the effect presentation bar including at least one effect content displayed in a preset target layout;
a switching module, configured to switch the effect presentation bar from the inactivated state to an activated state in response to a preset trigger operation by a user on the effect presentation bar;
a determination module, configured to determine a target effect currently selected by the user; and
a content acquisition module, configured to perform the media content acquisition operation based on the target effect.

In a third aspect, an embodiment of the present disclosure provides an electronic device, comprising: a processor and a memory;
wherein the memory stores computer-executable instructions; and
the processor executes the computer-executable instructions stored in the memory, so that the at least one processor performs the media content acquisition method as recited in the first aspect and various possible designs of the first aspect.

In a fourth aspect, an embodiment of the present disclosure provides a computer-readable storage medium on which computer-executable instructions are stored, wherein a processor, when executing the computer-executable instructions, implements the media content acquisition method as recited in the first aspect and various possible designs of the first aspect.

In a fifth aspect, an embodiment of the present disclosure provides a computer program product including a computer program, wherein the computer program, when executed by a processor, implements the media content acquisition method as recited in the first aspect and various possible designs of the first aspect.

The media content acquisition method and apparatus, the device, the readable storage medium and the product provided by the embodiments of the present disclosure displays, in a media content acquisition page, an effect presentation bar in an inactivated state that displays at least one effect content, and in response to a preset trigger operation on the effect presentation bar by a user, switches the effect presentation bar to an activated state, so that the user can dynamically select a target effect based on the effect presentation bar in the activated state, and then can perform a media content acquisition operation based on the target effect.

### DETAILED DESCRIPTION

In order to more clearly illustrate the technical solutions in the embodiments of the present disclosure or related art, the accompanying drawings required for use in the description of the embodiments or related art will be briefly introduced below. Obviously, the drawings described below are only some embodiments of the present disclosure, and for those skilled in the art, other drawings can be obtained based on these drawings without creative efforts.
FIG. 1 is a schematic flow chart of a media content acquisition method provided by an embodiment of the present disclosure;
FIG. 2 is a schematic diagram of an interface interaction provided by an embodiment of the present disclosure;
FIG. 3 is a schematic diagram of another interface interaction provided by an embodiment of the present disclosure;
FIG. 4 is a schematic diagram of another interface interaction provided by an embodiment of the present disclosure;
FIG. 5 is a schematic diagram of another interface interaction provided by an embodiment of the present disclosure;
FIG. 6 is a schematic flow chart of a media content acquisition method provided by another embodiment of the present disclosure;
FIG. 7 is a schematic diagram of another interface interaction provided by an embodiment of the present disclosure;
FIG. 8 is a schematic structural diagram of a media content acquisition apparatus provided by an embodiment of the present disclosure;
FIG. 9 is a schematic structural diagram of an electronic device provided by an embodiment of the present disclosure.

### BRIEF DESCRIPTION OF THE DRAWINGS

In order to make the objectives, technical solutions and advantages of the embodiments of the present disclosure clearer, the technical solutions in the embodiments of the present disclosure will be clearly and completely described below in conjunction with the drawings in the embodiments of the present disclosure. Obviously, the described embodiments are part of the embodiments of the present disclosure, rather than all of the embodiments. Based on the embodiments in the present disclosure, all other embodiments obtained by those skilled in the art without creative labor shall fall within the scope of protection of the present disclosure.

In order to solve the technical problems that the current interaction mode of effect selection is relatively simple and the user experience of the interaction is poor, causing relatively cumbersome operations of effect selection, the present disclosure provides a media content acquisition method and apparatus, a device, a readable storage medium and a product.

It should be noted that the media content acquisition method and apparatus, the device, the readable storage medium and the product provided by the present disclosure may be applied to any media content acquisition scenario based on effects. The effects disclosed herein may include at least one of props, filters, templates, stickers, or other materials.

In the related art, if a user needs to select an effect object when acquiring media content, he or she needs to open an effect selection page and perform a selection operation thereon. However, the above operations are often cumbersome and the user experience needs to be improved.

In order to enhance the experience in the process of effect selection and interaction operation, an effect presentation bar including at least one effect content may be displayed in a media content acquisition page. The effect presentation bar may be switched from an inactivated state to an activated state based on a user's preset trigger operation. It can be understood that after the effect presentation bar is switched from the inactivated state to the activated state, the style of the effect presentation bar may change, such as the size, shape, color, etc. of the effect presentation bar and/or a preset display area, or the style of the effect content in the effect presentation bar may also change.

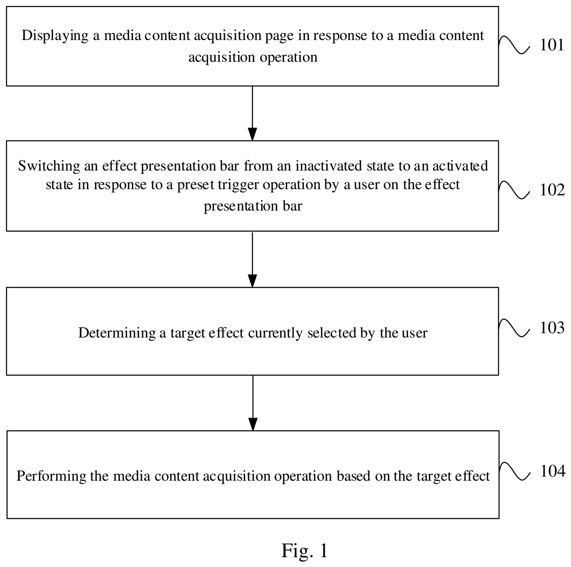

FIG. 1 is a schematic flow chart of a media content acquisition method provided by an embodiment of the present disclosure, and as shown in FIG. 1, the method comprises:
Step 101: displaying a media content acquisition page in response to a media content acquisition operation, wherein a preset display area of the media content acquisition page includes an effect presentation bar in an inactivated state, the effect presentation bar including at least one effect content displayed in a preset target layout.

The execution subject of this embodiment is a media content acquisition apparatus, which may be coupled to a terminal device, and thus can select a target effect to perform a media content acquisition operation based on a trigger operation by a user on the terminal device. Optionally, the media content acquisition apparatus may also be coupled to a server communicatively connected to the terminal device, and thus can control the terminal device to perform the media content acquisition operation based on the trigger operation by the user on the terminal device.

In this embodiment, when the user browses media content or performs instant messaging operation in the application software, upon the need for acquiring the media content, the user may trigger the media content acquisition operation through a trigger operation on a preset content acquisition control.

Accordingly, in response to the media content acquisition operation triggered by the user, a preset media content acquisition page can be displayed, so that the user can realize the media content acquisition operation based on the media content acquisition page.

Optionally, in order to make the user obtain media content of higher quality that meets more personalized needs, existing application software generally provides the user with objects such as effects and filters for selection. Further, in order to enable the user to realize a select operation on a target effect in the media content acquisition page more intuitively and quickly, an effect presentation bar in an inactivated state may be displayed in a preset display area of the media content acquisition page, wherein the effect presentation bar in the inactivated state may include at least one effect content displayed in a preset target layout. The at least one effect content is fixedly displayed in the effect presentation bar in the inactivated state. Thus, the user can view the effect content upon opening the media content acquisition page.

As an implementable mode, an acquisition control may be displayed in the media content acquisition page. For example, the acquisition control may be a shooting control. Exemplarily, in order to prevent a framed area from being blocked so that the user can know about the currently acquired content, the preset display area may be located below the shooting control.

For example, the target layout may be to display a row of effect content in the preset display area. Alternatively, the user may also adjust the target layout according to actual needs, which is not limited in the present disclosure.

Optionally, in order to enable the user to view more real-time effect content with higher attention, the at least one effect content displayed in the effect presentation bar may be updated. It is possible to detect whether there is currently any updated effect content according to a preset detection cycle. If so, an update operation is performed on the at least one effect content according to the updated effect content.

Step 102: switching the effect presentation bar from the inactivated state to an activated state in response to a preset trigger operation by the user on the effect presentation bar.

In this embodiment, the at least one effect content is fixedly displayed in the effect presentation bar in the inactivated state, and in this case, the user may perform media content acquisition in a normal shooting mode. When desiring to perform shooting using the effects in the effect presentation bar for shooting, the user may further switch the state of the effect presentation bar. It can be understood that before and after switching the state of the effect presentation bar, the same interaction operation performed by the user in the media content acquisition page, such as the framed area, may correspond to different functions.

Optionally, the effect presentation bar may be switched from the inactivated state to the activated state in response to the preset trigger operation by the user on the effect presentation bar. In the activated state, the user can realize a switching operation on the effect content presented in the effect presentation bar through a preset trigger gesture such as a slide operation, so as to view more effect content.

As an implementable mode, after switching the effect presentation bar to an activated state, a preset favorite control may also be displayed in the preset display area. In response to a trigger operation by the user on the favorite control, a favorites operation is performed on the currently selected effect content.

Optionally, after switching the effect presentation bar to an activated state, a preset search control may also be displayed in the preset display area. The user can realize a search operation on the effect content based on the search control. Search information generated by the user based on the search control is obtained. An effect content search operation is performed based on the search information.

Step 103: determining a target effect currently selected by the user.

In this embodiment, in the activated state, the effect content presented in the effect presentation bar may be switched in response to the trigger operation by the user. Thus, the user can view more effect content. In addition, the selection of the effect content may be realized in response to the trigger operation by the user, and the target effect may be determined.

Step 104: performing the media content acquisition operation based on the target effect.

In this embodiment, after completing the select operation on the target effect, the display effect of the target effect may be displayed in the media content acquisition page. The user is made to intuitively understand the display effect of the target effect.

Furthermore, the media content acquisition operation may be performed based on the target effect. For example, in response to the trigger operation by the user on the acquisition control, the media content acquisition operation may be performed based on the target effect.

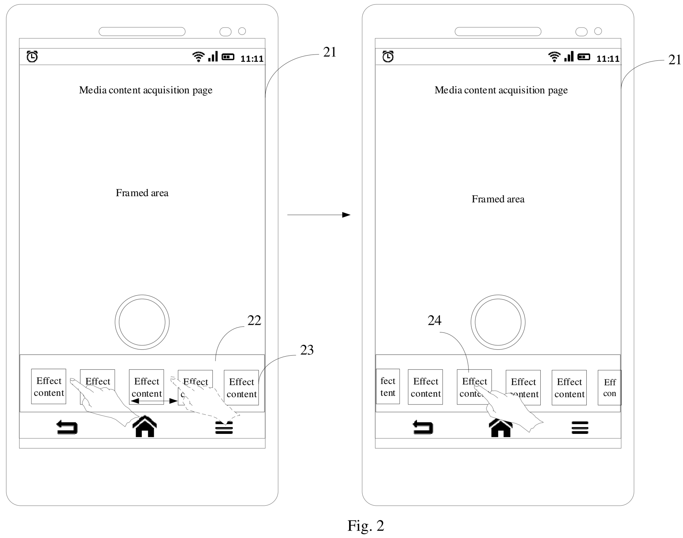

FIG. 2 is a schematic diagram of an interface interaction provided by an embodiment of the present disclosure. As shown in FIG. 2, an effect presentation bar 22 in an inactivated state may be displayed in a media content acquisition page 21, and at least one effect content 23 may be fixedly displayed in a preset target layout on the effect presentation bar 22 in the inactivated state. In response to a slide operation triggered by the user in the effect presentation bar 22, the effect presentation bar 22 may be switched to an activated state, wherein the slide operation may be a slide operation toward the left side. In the activated state, the user may switch the effect content currently presented in the effect presentation bar 22 through the slide operation. In response to a select operation by the user on any effect content 23, the effect content selected by the user is determined as a target effect 24.

Further, based on any of the above embodiments, step 101 comprises:
in response to a trigger operation by the user on a preset content acquisition control in the media content presentation page, displaying the media content acquisition page.

In the effect presentation bar in the media content acquisition page, the at least one effect content is displayed in the preset target layout, the media content presentation page being used for displaying a media content stream including the at least one media content.

In this embodiment, the user may perform a browse operation on a media content stream in the media content presentation page. The media content presentation page is used for displaying a media content stream including at least one media content. A content acquisition control may be set in advance in the media content presentation page. In response to a trigger operation by the user on the preset content acquisition control in the media content presentation page, the media content acquisition page is displayed, wherein the at least one effect content may be displayed in the effect presentation bar in the media content acquisition page in the preset target layout.

In the media content acquisition method provided by this embodiment, an effect presentation bar in an inactivated state in which at least one effect content is displayed is displayed in a media content acquisition page, and in response to a preset trigger operation by a user on the effect presentation bar, the effect presentation bar is switched to an activated state, so that the user can dynamically select a target effect based on the effect presentation bar in the activated state, and then can perform a media content acquisition operation based on the target effect. This enriches the interaction mode of effect selection in the media content acquisition page, and enriches the display content in the media content acquisition page, so that the user can realize the selection of the target effect and the acquisition of the media content more quickly, thereby improving the user experience.

In order to further enrich the interaction mode in the media content acquisition page, a variety of different activation modes of the effect presentation bar may be set in advance. In actual applications, the user may flexibly select any activation mode to realize a switch operation on the state of the effect presentation bar.

Optionally, based on any of the above embodiments, step 102 comprises at least one of the following:

In response to a trigger operation by the user on an effect control in the preset display area, the effect presentation bar is switched from the inactivated state to the activated state. The preset effect control is included in the media content acquisition page.

In this embodiment, an effect control may be set in advance in the media content acquisition page. Optionally, the effect control may be set in the preset display area including the effect presentation bar. For example, the effect control may be set on the left side of the acquisition control. Alternatively, it may also be set at other display positions in the media content acquisition page, which is not limited in the present disclosure.

Furthermore, the user may switch the state of the effect presentation bar by a trigger operation on the effect control. In response to the trigger operation by the user on the effect control in the preset display area, the effect presentation bar is switched from the inactivated state to the activated state.

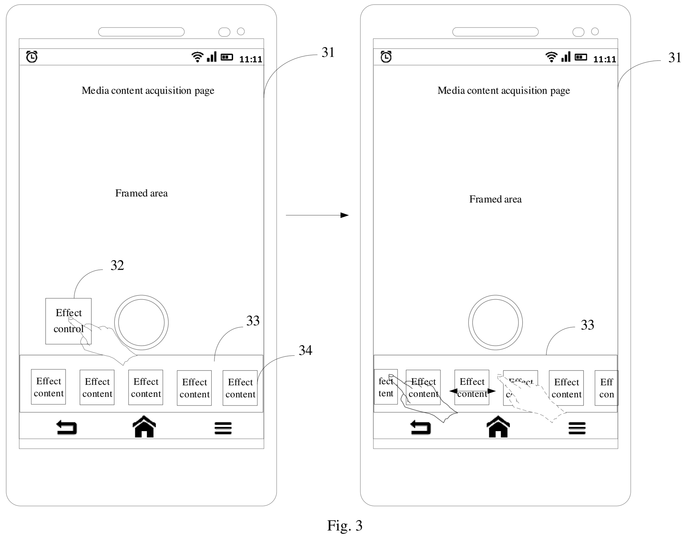

FIG. 3 is a schematic diagram of another interface interaction provided by an embodiment of the present disclosure. As shown in FIG. 3, an effect control 32 is displayed in a preset display area in a media content acquisition page 31, and at least one effect content 34 is displayed in an inactivated effect presentation bar 33 in an inactivated state. In response to a trigger operation by a user on the effect control 32, the effect presentation bar 33 may be switched to an activated state. In the activated state, the user may switch the effect content currently presented in the effect presentation bar 33 through a slide operation.

In response to a first slide operation triggered by the user in the preset display area, the effect presentation bar is switched from the inactivated state to an activated state.

In this embodiment, the user may also switch the state of the effect presentation bar by performing the first slide operation on the preset display area in which the effect presentation bar is located. In response to the first slide operation triggered by the user in the preset display area, the effect presentation bar is switched from the inactivated state to the activated state, wherein the first slide operation may be a slide operation in a horizontal direction. For example, it may be a slide operation toward the left side.

In response to a trigger operation by the user on a preset position in the preset display area, the effect presentation bar is switched from the inactivated state to the activated state.

In this embodiment, the preset position includes at least one effect content presented in the effect presentation bar and a preset blank area in the effect presentation bar, and the user may also switch the state of the effect presentation bar by triggering the effect content. In response to the trigger operation by the user on the preset position in the preset display area, the effect presentation bar is switched from the inactivated state to the activated state. Exemplarily, when the preset position clicked by the user is the effect content, the effect content may be used as the selected target effect; when the preset position clicked by the user is the blank area, the preset effect content may be used as the selected target effect.

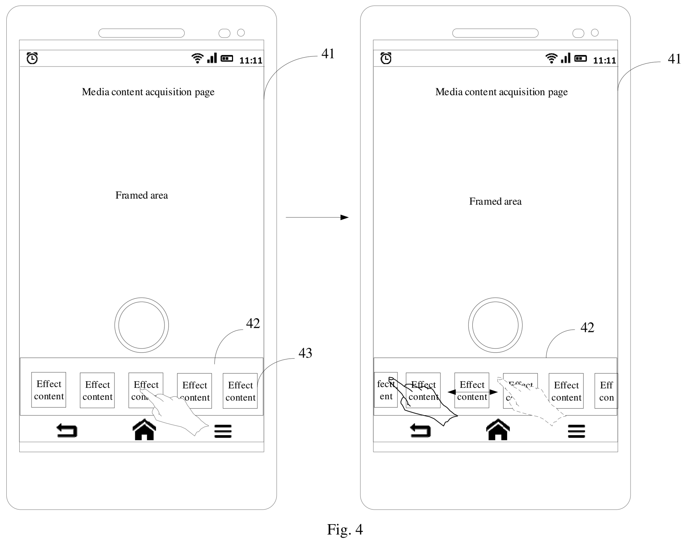

FIG. 4 is a schematic diagram of another interface interaction provided by an embodiment of the present disclosure. As shown in FIG. 4, an effect presentation bar 42 in an inactivated state is displayed in a preset display area in a media content acquisition page 41, and at least one effect content 43 is displayed in the effect presentation bar 42. In response to a trigger operation by a user on any effect content 43 or a blank area of the effect presentation bar 42, the effect presentation bar 42 may be switched to an activated state. In the activated state, the user may switch the effect content currently presented in the effect presentation bar 42 through a slide operation.

In response to a second slide operation by the user on a framed area in the media content acquisition page, the effect presentation bar is switched from the inactivated state to the activated state.

In this embodiment, the media content acquisition page further includes a framed area, which can present the currently acquired content, causing the user to view the effect of content acquisition more intuitively.

Optionally, the user may also switch the state of the effect presentation bar by a slide operation on the framed area. In response to a second slide operation by the user on the framed area in the media content acquisition page, the effect presentation bar is switched from the inactivated state to the activated state.

The second slide operation may be a slide operation in a horizontal direction. The second slide operation may be an interacting operation in the same horizontal direction as the first slide operation. For example, both may be slide operations toward the left side. Alternatively, the second slide operation may be a slide operation in a direction opposite to the first slide operation. For example, the first slide operation may be a slide operation toward the left side, and the second slide operation may be a slide operation toward the right side. Alternatively, the first slide operation may be a slide operation toward the right side, and the second slide operation may be a slide operation toward the left side.

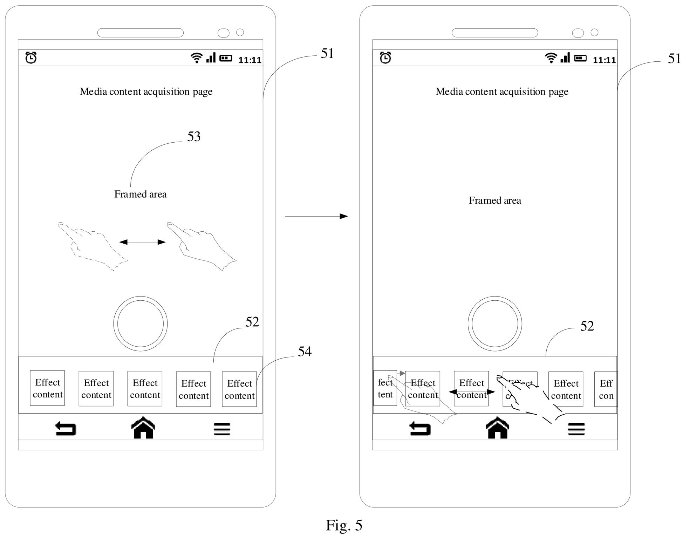

FIG. 5 is a schematic diagram of another interface interaction provided by an embodiment of the present disclosure. As shown in FIG. 5, an effect presentation bar 52 and a framed area 53 are displayed in a preset display area in a media content acquisition page 51, and at least one effect content 54 is displayed in the effect presentation bar 52 in an inactivated state. In response to a second slide operation triggered by the user in the framed area 53, the effect presentation bar 52 may be switched to an activated state. In the activated state, the user may switch the effect content currently presented in the effect presentation bar 52 by a slide operation on the framed area 53 or the effect presentation bar 52.

It can be understood that, in some embodiments, when the effect presentation bar is not activated, the slide operation on the framed area does not support the activation of the effect presentation bar; only when the effect presentation bar is activated, the slide operation on the framed area can switch the selected effect content.

The media content acquisition method provided in this embodiment enables the user to realize the selection operation on the target effect more conveniently and rapidly by switching the state of the effect presentation bar based on one or more of the second slide operation on the framed area, the first slide operation in the preset display area, the trigger operation on the effect content, and the trigger operation on the preset effect control, thereby enriching the interaction mode of the effect selection and improving the user experience.

Optionally, based on any of the above embodiments, step 103 includes:
in response to a switching operation triggered by the user on the at least one effect content in the effect presentation bar in the activated state, determining the target effect currently selected by the user, or,
determining, as the target effect content, a preset effect content in the at least one effect content in the effect presentation bar in the activated state.

In this embodiment, when the state of the effect presentation bar is switched to the activated state, the user may perform the switching operation on the effect content presented in the effect presentation bar according to actual needs. Accordingly, the target effect may be determined in response to the switching operation triggered by the user. For example, in the switching process, the user may click on the effect content of interest to determine the target effect.

As an implementable mode, a preset effect content may be set in advance in the at least one effect content. Therefore, the preset effect content in the at least one effect content in the effect presentation bar in the activated state may be determined as the target effect content. For example, the preset effect content may be a first effect content in the at least one effect content currently presented. Alternatively, the preset effect content may be the effect content that is most frequently used by the user in the at least one effect content currently presented, or the like. This is not limited in the present disclosure.

The media content acquisition method provided in this embodiment enriches the way of determining the target effect by taking the effect content selected by the user as the target effect, or determining the preset effect content in the effect presentation bar as the target effect.

Optionally, based on any of the above embodiments, the method further comprises:
in response to a preset trigger operation by the user on the effect presentation bar, displaying the display effect corresponding to a preset effect content in the at least one effect content in a framed area in the media content acquisition page.

In this embodiment, when the user performs a preset trigger operation on the effect presentation bar, the state of the effect presentation bar may be switched to an activated state.

As an implementable mode, when it is detected that the user performs a preset trigger operation on the effect presentation bar, the display effect corresponding to a preset effect content in the at least one effect content may be displayed in a framed area in the media content acquisition page.

For example, if it is detected that the user performs a preset trigger operation on the effect presentation bar, the display effect of a first effect content in the at least one effect content may be displayed in the framed area in the media content acquisition page.

The above two implementation modes can be implemented separately or in combination. When they are implemented in combination, upon the detection that the user performs a preset trigger operation on the effect presentation bar, the state of the effect presentation bar may be switched to an activated state, and the display effect of the first effect content in the at least one effect content may be displayed in the framed area of the media content acquisition page.

The media content acquisition method provided in this embodiment, by displaying the display effect corresponding to the preset effect content in the at least one effect content in the framed area in the media content acquisition page in response to a preset trigger operation by the user on the effect presentation bar, can quickly present the display effect of the effect content when the effect presentation bar is switched to the activated state, thus enriching the display effect in the media content acquisition page.

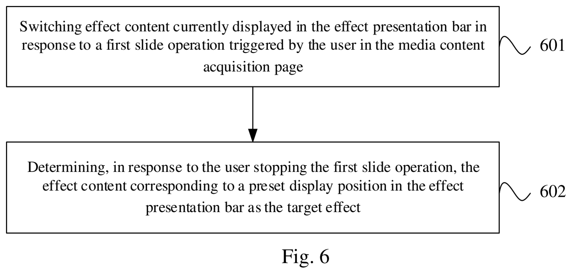

FIG. 6 is a schematic flow chart of a media content acquisition method provided by another embodiment of the present disclosure. Based on any of the above embodiments, as shown in FIG. 6, step 103 comprises:
Step 601: in response to a first slide operation triggered by the user on the media content acquisition page, switching the effect content currently displayed in the effect presentation bar.
Step 602: in response to the user stopping the first slide operation, determining the effect content corresponding to a preset display position in the effect presentation bar as the target effect.

In this embodiment, when the state of the effect presentation bar is switched to an activated state, the user may perform a switching operation on the effect content presented in the effect presentation bar according to actual needs.

Optionally, the user may trigger a first slide operation on the media content acquisition page, wherein the first slide operation may be a slide operation toward a preset first direction. In response to the first slide operation, the effect content currently displayed in the effect presentation bar may be switched, so that the user can view more effect content.

Furthermore, a preset display position may be set in advance in the effect presentation bar. For example, the preset display position may be a first display position in the effect presentation bar, or may be a middle position in the effect presentation bar, or the like. By setting the preset display position, when it is detected that the user stops the first slide operation, the effect content corresponding to the preset display position in the effect presentation bar may be determined as the target effect.

The media content acquisition method provided in this embodiment, by performing a switching operation on the effect content according to the first slide operation triggered by the user on the media content acquisition page when the effect presentation bar is in an activated state, and determining the effect content corresponding to the preset display position in the effect presentation bar as the target effect, enables the user to view more effect content in the effect presentation bar. In addition, the user can quickly determine the target effect through the first slide operation and the preset display position, which enriches the interaction mode of the effect selection operation, simplifies the operational flow of the effect selection operation, and improves the user experience.

Further, based on any of the above embodiments, step 602 comprises:
in response to a first slide operation triggered by the user in the effect presentation bar, switching the effect content currently displayed in the effect presentation bar at a preset first switching speed;
in response to a first slide operation triggered by the user in a framed area in the media content acquisition page, switching the effect content currently displayed in the effect presentation bar at a preset second switching speed,
wherein the first switching speed is different from the second switching speed.

In this embodiment, the media content acquisition page includes an effect presentation bar area and a framed area. The user may trigger the first slide operation in the effect presentation bar area or the framed area to switch the effect content.

Optionally, in response to a first slide operation triggered by the user in the effect presentation bar, the effect content currently displayed in the effect presentation bar may be switched at a preset first switching speed. In response to a first slide operation triggered by the user in the framed area in the media content acquisition page, the effect content currently displayed in the effect presentation bar may be switched at a preset second switching speed.

It should be noted that, in order to enrich the display effect in the media content acquisition page, the first switching speed is different from the second switching speed. For example, the first switching speed may be greater than the second switching speed. When the user triggers a first slide operation in the effect presentation bar, in response to the first slide operation, the effect content displayed in the current effect presentation bar may be switched quickly. When the user triggers a first slide operation in the framed area in the media content acquisition page, the effect content presented in the current effect presentation bar may be switched at a lower speed. For example, an effect content may be switched in response to a single first slide operation triggered by the user in the framed area.

The media content acquisition method provided in this embodiment, by performing a switching operation on the effect content at different switching speeds based on the first slide operation by the user in the framed area and the effect presentation bar, enables the user to view more effect content in the effect presentation bar, thereby further enriching the display effect in the media content acquisition page.

Further, based on any of the above embodiments, after step 102, the method further comprises:
in response to a trigger operation by the user on the effect control, displaying a preset effects panel, wherein a plurality of effect contents are included in the effects panel, and a layout mode of the plurality of effect contents is different from a target layout mode in the effect presentation bar.

In this embodiment, after switching the effect presentation bar to an activated state, a preset effect panel may be presented in response to a trigger operation by the user on the effect control, wherein a plurality of effect contents are included in the effects panel, and a layout mode of the plurality of effect contents is different from a target layout mode in the effect presentation bar.

For example, the target layout may be to display a row of effect content. The layout mode in the effect panel may be to display multiple rows of effect content.

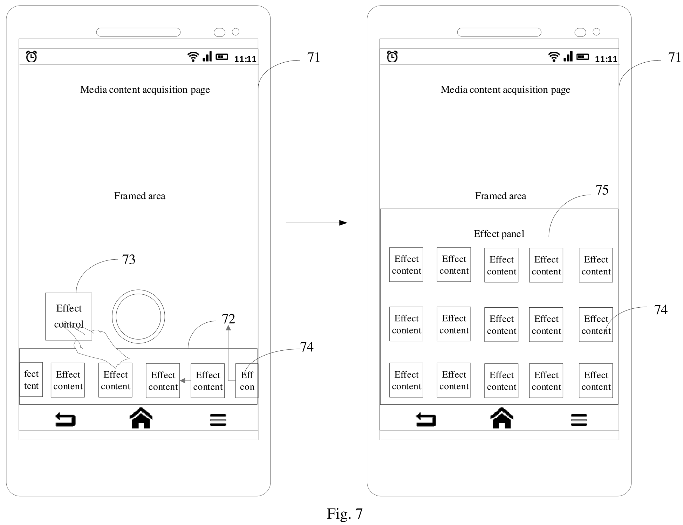

FIG. 7 is a schematic diagram of another interface interaction provided by an embodiment of the present disclosure. As shown in FIG. 7, an effect presentation bar 72 in an activated state and an effect control 73 may be displayed in a media content acquisition page 71. In the activated state, a user may perform a switching operation on effect content 74 in the effect presentation bar 72. In response to a trigger operation by the user on the effect control 73, a preset effect panel 75 may be displayed, wherein a plurality of effect contents 74 are included in the effect panel 75, and a layout mode of the plurality of effect contents 74 is different from a target layout mode in the effect presentation bar.

The media content acquisition method provided in this embodiment, by displaying a preset effect panel in response to a trigger operation by the user on an effect control, and presenting the effect content in the effect panel in a layout mode different from a target layout mode, can further enrich the display effect of the effect content and enable the user to view more effect content based on the effects panel.

Optionally, based on any of the above embodiments, the method further comprises:
when the effect presentation bar is in an inactivated state, in response to a third slide operation triggered by the user in the effect presentation bar, displaying a preset effects panel, wherein a plurality of effect contents are included in the effects panel, and a layout mode of the plurality of effect contents is different from a target layout mode in the effect presentation bar; or
when the effect presentation bar is in an activated state, in response to a fourth slide operation triggered by the user in the effect presentation bar, displaying a preset effects panel, wherein a plurality of effect contents are included in the effects panel, and a layout mode of the plurality of effect contents is different from a target layout mode in the effect presentation bar.

In this embodiment, when the effect presentation bar is in an activated state or an inactivated state, the presentation of the effect panel can be realized, wherein a plurality of effect contents are included in the effects panel, and a layout mode of the plurality of effect contents is different from a target layout mode in the effect presentation bar.

Optionally, when the effect presentation bar is in an inactivated state, in response to a third slide operation triggered by the user in the effect presentation bar, a preset effect panel is displayed, wherein the third slide operation may be a slide operation toward a specified direction along a preset display area.

Optionally, when the effect presentation bar is in an activated state, in response to a fourth slide operation triggered by the user in the effect presentation bar, a preset effect panel is displayed, wherein the fourth slide operation may be a slide operation opposite to the third slide operation, or the fourth slide operation may be a slide operation in the same direction as the third slide operation, which is not limited in the present disclosure.

The media content acquisition method provided in this embodiment, by displaying a preset effect panel in response to a third slide operation triggered by the user in the effect presentation bar when the effect presentation bar is in an inactivated state, and displaying a preset effect panel in response to a fourth slide operation triggered by the user in the effect presentation bar when the effect presentation bar is in an activated state, can call up the effect panel by using the same or different slide operations when the effect presentation bar is in different states, thereby further enriching the presentation effect of the effect content, and allowing the user to view more effect content based on the effects panel.

After the effect panel is expanded, in order to enable the user to view the currently selected effect content more intuitively, the currently selected effect content may also be located and displayed distinctively in the effects panel.

Optionally, a plurality of effects categories are included in the effects panel, each effect category corresponding to a plurality of effect contents. After the preset effect panel is displayed, a plurality of effect contents corresponding to a preset effect category may be displayed in the effects panel. The user may select an effect category according to actual needs, and in response to a switching operation by the user on the effect category, a target effect category currently selected by the user is determined. A plurality of effect contents corresponding to a target effect category are displayed in the effects panel.

Furthermore, after an effect category is selected by the user in the effect panel and at least one effect content corresponding to the effect category is presented, the at least one effect content corresponding to the effect category may be synchronously displayed in the effect presentation bar. Therefore, in response to a closing operation triggered by the user, the effect panel may be closed. A plurality of effect contents corresponding to the target effect category are displayed in a preset display area of the media content acquisition page.

Optionally, in response to a trigger operation by the user on any effect content in the effects panel, the display effect corresponding to the effect content selected by the user may be switched and displayed in a framed area of the media content acquisition page.

Optionally, the effect category includes one or more of a popular effect category, a commonly used effect category, a favorite effect category, and a custom effect category.

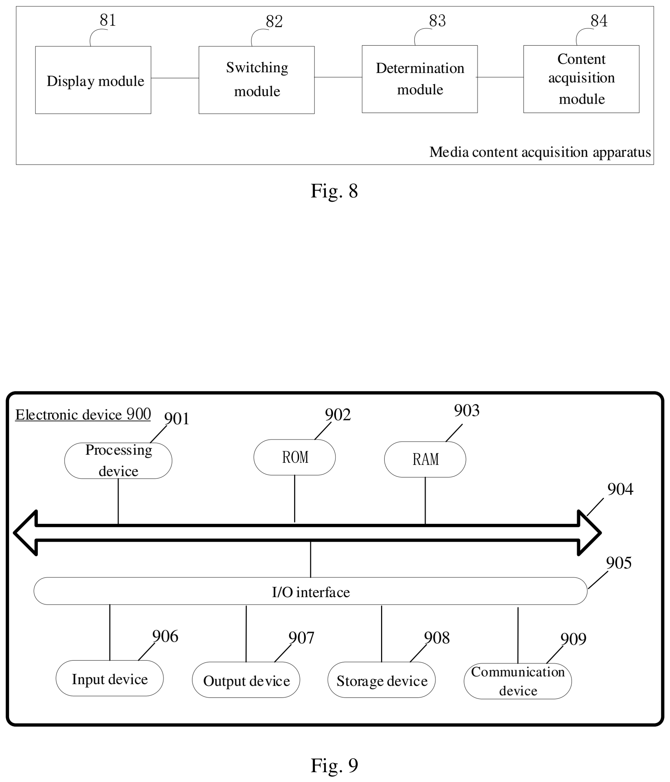

FIG. 8 is a schematic structural diagram of a media content acquisition apparatus provided by an embodiment of the present disclosure. As shown in FIG. 8, the apparatus comprises: a display module 81, a switching module 82, a determination module 83 and a content acquisition module 84, wherein the display module 81 is configured to display a media content acquisition page in response to a media content acquisition operation, wherein a preset display area of the media content acquisition page includes an effect presentation bar in an inactivated state, the effect presentation bar including at least one effect content displayed in a preset target layout; the switching module 82 is configured to switch, in response to a preset trigger operation by the user on the effect presentation bar, the effect presentation bar from the inactivated state to an activated state; the determination module 83 is configured to determine a target effect currently selected by the user; the content acquisition module 84 is configured to perform the media content acquisition operations based on the target effects.

Further, based on any of the above embodiments, it is configured to perform at least one of: in response to a trigger operation by the user on an effect control in the preset display area, switching the effect presentation bar from the inactivated state to an activated state, the preset effect control being included in the media content acquisition page; in response to a first slide operation triggered by the user in the preset display area, switching the effect presentation bar from the inactivated state to an activated state; in response to a trigger operation by the user on a preset position in the preset display area, switching the effect presentation bar from the inactivated state to an activated state; in response to a second slide operation by the user on a framed area in the media content acquisition page, switching the effect presentation bar from the inactivated state to an activated state.

Further, based on any of the above embodiments, the determination module is configured to: determine a target effect currently selected by the user in response to a switching operation triggered by the user on at least one effect content in the effect presentation bar in the activated state; or determine, as the target effect content, a preset effect content in the at least one effect content in the effect presentation bar in the activated state.

Further, based on any of the above embodiments, the apparatus further comprises: a display module, configured to display, in response to a preset trigger operation by the user on the effect presentation bar, the display effect corresponding to the preset effect content in the at least one effect content in the framed area of the media content acquisition page.

Further, based on any of the above embodiments, the determination module is configured to: in response to a first slide operation triggered by the user in the media content acquisition page, switch the effect content currently displayed in the effect presentation bar; in response to the user stopping the first slide operation, determine the effect content corresponding to a preset display position in the effect presentation bar as the target effect.

Further, based on any of the above embodiments, the determination module is configured to: in response to a first slide operation triggered by the user in the effect presentation bar, switch the effect content currently displayed in the effect presentation bar at a preset first switching speed; in response to a first slide operation triggered by the user in the framed area in the media content acquisition page, switch the effect content currently displayed in the effect presentation bar at a preset second switching speed, wherein the first switching speed is different from the second switching speed.

Further, based on any of the above embodiments, the apparatus further comprises: a display module, configured to display a preset effect panel in response to a trigger operation by the user on the effect control, wherein a plurality of effect contents are included in the effects panel, and a layout mode of the plurality of effect contents is different from a target layout mode in the effect presentation bar.

Further, based on any of the above embodiments, the apparatus further comprises: a display module, configured to display a preset effect panel in response to a third slide operation triggered by the user in the effect presentation bar when the effect presentation bar is in an inactivated state, wherein a plurality of effect contents are included in the effects panel, and a layout mode of the plurality of effect contents is different from a target layout mode in the effect presentation bar; or the display module, which is further configured to display a preset effect panel in response to a fourth slide operation triggered by the user in the effect presentation bar when the effect presentation bar is in an activated state, wherein a plurality of effect contents are included in the effects panel, and a layout mode of the plurality of effect contents is different from a target layout mode in the effect presentation bar.

Further, based on any of the above embodiments, the display module is configured to: display the media content acquisition page in response to a trigger operation by the user on a preset content acquisition control in the media content presentation page. In the effect presentation bar in the media content acquisition page, at least one effect content is displayed in a preset target layout, the media content presentation page being used to display a media content stream including the at least one media content.

The apparatus provided in this embodiment may be configured to execute the technical solutions of the above method embodiments, and their implementation principles and technical effects are similar, which will not be repeated herein.

In order to implement the above embodiments, an embodiment of the present disclosure further provides an electronic device, comprising: a processor and a memory.

The memory stores computer executable instructions.

The processor executes the computer-executable instructions stored in the memory, so that the processor performs the media content acquisition method as recited in any of the above embodiments.

FIG. 9 is a schematic structural diagram of an electronic device provided by an embodiment of the present disclosure. As shown in FIG. 9, the electronic device 900 may be a terminal device or a server, wherein the terminal device may include, but is not limited to, mobile terminals such as mobile phones, laptop computers, digital broadcast receivers, personal digital assistants (briefly referred to as PDAs), portable Android devices (briefly referred to as PADs), portable media players (briefly referred to as PMPs), vehicle-mounted terminals (e.g., vehicle-mounted navigation terminals), etc., as well as fixed terminals such as digital TVs, desktop computers, etc. The electronic device shown in FIG. 9 is merely an example and should not limit the functions and scope of use of the embodiment of the present disclosure.

As shown in FIG. 9, the electronic device 900 may comprise a processing device (such as a central processing unit, a graphics processor, etc.) 901, which can perform various appropriate actions and processes according to a program stored in a read-only memory (briefly referred to as ROM) 902 or a program loaded from a storage device 908 to a random access memory (briefly referred to as RAM) 903. In the RAM 903, various programs and data necessary for the operation of the electronic device 900 are also stored. The processing device 901, the ROM 902, and the RAM 903 are connected to one another via a bus 904. An edit/output (I/O) interface 905 is also connected to the bus 904.

Typically, the following devices may be connected to the I/O interface 905: an input device 906 including, for example, a touch screen, a touchpad, a keyboard, a mouse, a camera, a microphone, an accelerometer, a gyroscope, etc.; an output device 907 including, for example, a liquid crystal display (briefly referred to as LCD), a speaker, a vibrator, etc.; a storage device 908 including, for example, a magnetic tape, a hard disk, etc.; and a communication device 909. The communication device 909 may allow the electronic device 900 to communicate with other devices wirelessly or by wire to exchange data. Although FIG. 9 shows the electronic device 900 possessing various devices, it should be understood that it is not required to implement or possess all of the devices shown. A greater or smaller number of devices may alternatively be implemented or provided.

In particular, according to an embodiment of the present disclosure, the process described above with reference to the flow chart may be implemented as a computer software program. For example, an embodiment of the present disclosure provides a computer program product, which comprises a computer program carried on a computer-readable medium, and the computer program contains program codes for executing the method shown in the flowchart. In such an embodiment, the computer program may be downloaded and installed from a network via the communication device 909, or installed from the storage device 908, or installed from the ROM 902. The computer program, when executed by the processing device 901, performs the above functions defined in the method of the embodiments of the present disclosure.

It should be noted that the computer-readable medium mentioned above in the present disclosure may be a computer-readable signal medium or a computer-readable storage medium or any combination of the two. The computer-readable storage medium may be, for example but not limited to, an electronic, magnetic, optical, electromagnetic, infrared, or semiconductor system, apparatus, or device, or any combination of the foregoing. More specific examples of computer-readable storage media may include, but are not limited to, an electrical connection having one or more wires, a portable computer disk, a hard disk, a random access memory (RAM), a read-only memory (ROM), an erasable programmable read-only memory (EPROM or flash memory), optical fibers, a portable compact disk-read-only memory (CD-ROM), an optical storage device, a magnetic storage device, or any suitable combination of the foregoing. In the present disclosure, the computer-readable storage medium may be any tangible medium that contains or stores a program for use by or in connection with an instruction execution system, apparatus, or device. In the present disclosure, the computer-readable signal medium may include a data signal propagated in a baseband or as a part of a carrier wave, in which a computer-readable program code is carried. Such propagated data signals may take a variety of forms, including but not limited to electromagnetic signals, optical signals, or any suitable combination of the foregoing. The computer-readable signal medium may also be any computer-readable medium other than computer-readable storage media and can send, propagate, or transport a program for use by or in connection with an instruction execution system, apparatus, or device. The program code embodied on the computer-readable medium may be transmitted using any appropriate medium, including but not limited to: wire, optical cable, RF (radio frequency), etc., or any suitable combination of the foregoing.

In order to implement the above embodiments, an embodiment of the present disclosure further provide a computer-readable storage medium on which computer-executable instructions are stored, wherein a processor, when executing the computer-executable instructions, implements the media content acquisition method as recited in any of the above embodiments.

In order to implement the above embodiments, an embodiment of the present disclosure further provides a computer program product including a computer program, wherein the computer program, when executed by a processor, implements the media content acquisition method as recited in any of the above embodiments.

The computer-readable medium may be included in the electronic device, or may exist independently without being incorporated into the electronic device.

The computer-readable medium carries one or more programs, which, when executed by an electronic device, causes the electronic device to perform the method according to the above embodiments.

Computer program code for performing operations of the present disclosure may be written in one or more programming languages, or a combination thereof, including but not limited to object-oriented programming languages such as Java, Smalltalk, C++, and conventional procedural programming languages such as "C" or similar programming languages. The program code may execute entirely on a user's computer, partly on the user's computer, as a stand-alone software package, partly on the user's computer and partly on a remote computer or entirely on the remote computer or server. In cases involving a remote computer, the remote computer may be connected to the user's computer through any type of network, including a local area network (briefly referred to as LAN) or a wide area network (briefly referred to as WAN), or may be connected to an external computer (e.g., through the Internet using an Internet service provider).

The flowchart and block diagrams in the figures illustrate the architecture, functionality, and operation of possible implementations of systems, methods and computer program products according to various embodiments of the present disclosure. In this regard, each block in the flowchart or block diagrams may represent a module, a program segment, or a portion of code, which contains one or more executable instructions for implementing the specified logical functions. It should also be noted that, in some alternative implementations, the functions noted in the blocks may occur out of the order noted in the figures. For example, two blocks shown in succession may, in fact, be executed substantially in parallel, or they may sometimes be executed in the reverse order, depending on the functionality involved. It should also be noted that each block in the block diagram and/or flowchart, and combinations of blocks in the block diagram and/or flowchart, can be implemented by a dedicated hardware-based system that performs the specified functions or operations, or can be implemented by a combination of dedicated hardware and computer instructions.

The involved units described in the embodiments in the present disclosure may be implemented by software or by hardware. In some cases, the name of a unit does not constitute a limitation on the unit itself. For example, a first acquisition unit may also be described as a "unit for acquiring at least two Internet Protocol addresses".

The functions described above herein may be performed at least in part by one or more hardware logic components. For example, and without limitation, exemplary types of hardware logic components that may be used include: field programmable gate arrays (FPGAs), application specific integrated circuits (ASICs), application specific standard products (ASSPs), systems on chips (SOCs), complex programmable logic devices (CPLDs), and the like.

In the context of the present disclosure, a machine-readable medium may be a tangible medium that can contain or store a program for use by or in connection with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of machine-readable storage media would include electrical connections based on one or more wires, a portable computer disk, a hard disk, a random access memory (RAM), a read-only memory (ROM), an erasable programmable read-only memory (EPROM or flash memory), optical fibers, a portable compact disk-read-only memory (CD-ROM), an optical storage device, a magnetic storage device, or any suitable combination of the foregoing.

In a first aspect, in accordance with one or more embodiments of the present disclosure, is provided a media content acquisition method, comprising:
displaying a media content acquisition page in response to a media content acquisition operation, wherein a preset display area of the media content acquisition page includes an effect presentation bar in an inactivated state, the effect presentation bar including at least one effect content displayed in a preset target layout;
switching the effect presentation bar from the inactivated state to an activated state in response to a preset trigger operation by a user on the effect presentation bar;
determining a target effect currently selected by the user; and
performing the media content acquisition operation based on the target effect.

In accordance with one or more embodiments of the present disclosure, the switching the effect presentation bar from the inactivated state to an activated state in response to a preset trigger operation by a user on the effect presentation bar comprises at least one of:
in response to a trigger operation by the user on an effect control in the preset display area, switching the effect presentation bar from the inactivated state to an activated state, the preset effect control being included in the media content acquisition page;
in response to a first slide operation triggered by the user in the preset display area, switching the effect presentation bar from the inactivated state to an activated state;
in response to a trigger operation by the user on a preset position in the preset display area, switching the effect presentation bar from the inactivated state to an activated state; and
in response to a second slide operation by the user on a framed area of the media content acquisition page, switching the effect presentation bar from the inactivated state to an activated state.

In accordance with one or more embodiments of the present disclosure, the determining a target effect currently selected by the user comprises:
determining a target effect currently selected by the user in response to a switching operation triggered by the user on the at least one effect content in the effect presentation bar in the activated state; or
determining, as the target effect content, a preset effect content in the at least one effect content in the effect presentation bar in the activated state.

In accordance with one or more embodiments of the present disclosure, the method further comprises:
displaying, in response to a preset trigger operation by the user on the effect presentation bar, the display effect corresponding to the preset effect content in the at least one effect content in a framed area of the media content acquisition page.

In accordance with one or more embodiments of the present disclosure, the determining a target effect currently selected by the user comprises:
switching the effect content currently displayed in the effect presentation bar in response to a first slide operation triggered by the user in the media content acquisition page; and
determining, in response to the user stopping the first slide operation, the effect content corresponding to a preset display position in the effect presentation bar as the target effect.

In accordance with one or more embodiments of the present disclosure, the switching the effect content currently displayed in the effect presentation bar in response to a first slide operation triggered by the user in the media content acquisition page comprises:
in response to a first slide operation triggered by the user in the effect presentation bar, switching the effect content currently displayed in the effect presentation bar at a preset first switching speed; and
in response to a first slide operation triggered by the user in a framed area of the media content acquisition page, switching the effect content currently displayed in the effect presentation bar at a preset second switching speed,
wherein the first switching speed is different from the second switching speed.

In accordance with one or more embodiments of the present disclosure, after the switching the effect presentation bar from the inactivated state to an activated state in response to a preset trigger operation by a user on the effect presentation bar, the method further comprises:
displaying a preset effect panel in response to a trigger operation by the user on the effect control, wherein a plurality of effect contents are included in the effects panel, and a layout mode of the plurality of effect contents is different from a target layout mode in the effect presentation bar.

In accordance with one or more embodiments of the present disclosure, the method further comprises:
displaying a preset effect panel in response to a third slide operation triggered by the user in the effect presentation bar when the effect presentation bar is in an inactivated state, wherein a plurality of effect contents are included in the effects panel, and a layout mode of the plurality of effect contents is different from a target layout mode in the effect presentation bar; or
displaying a preset effect panel in response to a fourth slide operation triggered by the user in the effect presentation bar when the effect presentation bar is in an activated state, wherein a plurality of effect contents are included in the effects panel, and a layout mode of the plurality of effect contents is different from a target layout mode in the effect presentation bar.

In accordance with one or more embodiments of the present disclosure, the displaying a media content acquisition page in response to a media content acquisition operation comprises:
displaying the media content acquisition page in response to a trigger operation by the user on a preset content acquisition control in the media content presentation page; and
in the effect presentation bar in the media content acquisition page, displaying the at least one effect content in a preset target layout, the media content presentation page being used to display a media content stream including the at least one media content.

In a second aspect, in accordance with one or more embodiments of the present disclosure, is provided a media content acquisition apparatus, comprising:
a display module, configured to display a media content acquisition page in response to a media content acquisition operation, wherein a preset display area of the media content acquisition page includes an effect presentation bar in an inactivated state, the effect presentation bar including at least one effect content displayed in a preset target layout;
a switching module, configured to switch the effect presentation bar from the inactivated state to an activated state in response to a preset trigger operation by a user on the effect presentation bar;
a determination module, configured to determine a target effect currently selected by the user; and
a content acquisition module, configured to perform the media content acquisition operation based on the target effect.

In accordance with one or more embodiments of the present disclosure, the switching module is configured to perform at least one of:
in response to a trigger operation by the user on an effect control in the preset display area, switching the effect presentation bar from the inactivated state to an activated state, the preset effect control being included in the media content acquisition page;
in response to a first slide operation triggered by the user in the preset display area, switching the effect presentation bar from the inactivated state to an activated state;
in response to a trigger operation by the user on a preset position in the preset display area, switching the effect presentation bar from the inactivated state to an activated state;
in response to a second slide operation by the user on a framed area of the media content acquisition page, switching the effect presentation bar from the inactivated state to an activated state.

In accordance with one or more embodiments of the present disclosure, the determination module is configured to:
determine a target effect currently selected by the user in response to a switching operation triggered by the user on the at least one effect content in the effect presentation bar in the activated state; or
determine, as the target effect content, a preset effect content in the at least one effect content in the effect presentation bar in the activated state.

In accordance with one or more embodiments of the present disclosure, the apparatus further comprises:
a display module, configured to display, in response to a preset trigger operation by the user on the effect presentation bar, the display effect corresponding to the preset effect content in the at least one effect content in a framed area of the media content acquisition page.

In accordance with one or more embodiments of the present disclosure, the determination module is configured to:
switch the effect content currently displayed in the effect presentation bar in response to a first slide operation triggered by the user in the media content acquisition page;
determine, in response to the user stopping the first slide operation, the effect content corresponding to a preset display position in the effect presentation bar as the target effect.

In accordance with one or more embodiments of the present disclosure, the determination module is configured to:
in response to a first slide operation triggered by the user in the effect presentation bar, switch the effect content currently displayed in the effect presentation bar at a preset first switching speed;
in response to a first slide operation triggered by the user in a framed area of the media content acquisition page, switching the effect content currently displayed in the effect presentation bar at a preset second switching speed,
wherein the first switching speed is different from the second switching speed.

In accordance with one or more embodiments of the present disclosure, the apparatus further comprises:
a display module, configured to display a preset effect panel in response to a trigger operation by the user on the effect control, wherein a plurality of effect contents are included in the effects panel, and a layout mode of the plurality of effect contents is different from a target layout mode in the effect presentation bar.

In accordance with one or more embodiments of the present disclosure, the apparatus further comprises:
a display module, configured to display a preset effect panel in response to a third slide operation triggered by the user in the effect presentation bar when the effect presentation bar is in an inactivated state, wherein a plurality of effect contents are included in the effects panel, and a layout mode of the plurality of effect contents is different from a target layout mode in the effect presentation bar; or
a display module, further configured to display a preset effect panel in response to a fourth slide operation triggered by the user in the effect presentation bar when the effect presentation bar is in an activated state, wherein a plurality of effect contents are included in the effects panel, and a layout mode of the plurality of effect contents is different from a target layout mode in the effect presentation bar.

In accordance with one or more embodiments of the present disclosure, the display module is configured to:
display the media content acquisition page in response to a trigger operation by the user on a preset content acquisition control in the media content presentation page;
display, in the effect presentation bar in the media content acquisition page, the at least one effect content in a preset target layout, the media content presentation page being used to display a media content stream including the at least one media content.

In a third aspect, in accordance with one or more embodiments of the present disclosure, is provided an electronic device, comprising: at least one processor and a memory;
wherein the memory stores computer-executable instructions; and
the at least one processor executes the computer-executable instructions stored in the memory, so that the at least one processor performs the media content acquisition method as recited in the first aspect and various possible designs of the first aspect.

In a fourth aspect, in accordance with one or more embodiments of the present disclosure, is provided a computer-readable storage medium on which computer-executable instructions are stored, wherein a processor, when executing the computer-executable instructions, implements the media content acquisition method as recited in the first aspect and various possible designs of the first aspect.

In a fifth aspect, in accordance with one or more embodiments of the present disclosure, is provided a computer program product including a computer program, wherein the computer program, when executed by a processor, implements the media content acquisition method as recited in the first aspect and various possible designs of the first aspect.

The foregoing description is only exemplary of the preferred embodiments of the present disclosure and is illustrative of the principles of the technology employed. It will be appreciated by those skilled in the art that the scope of the disclosure herein is not limited to the particular combination of features described above, but also encompasses other combinations of features described above or equivalents thereof without departing from the spirit of the disclosure. For example, the above features and the technical features disclosed in the present disclosure (but not limited to) having similar functions are replaced with each other to form the technical solution.

Further, while operations are depicted in a particular order, this should not be understood as requiring that such operations be performed in the particular order shown or in a sequential order. Under certain circumstances, multitasking and parallel processing may be advantageous. Likewise, while the above discussion includes several specific implementation details, these should not be construed as limitations on the scope of the present disclosure. Certain features that are described in the context of separate embodiments can also be implemented in combination in a single embodiment. Conversely, various features that are described in the context of a single embodiment can also be implemented in multiple embodiments separately or in any suitable subcombination.

Although the subject matter has been described in language specific to structural features and/or methodological acts, it is to be understood that the subject matter defined in the appended claims is not necessarily limited to the specific features or acts described above. Rather, the specific features and acts described above are merely example forms of implementing the claims.

## Claims

1. A media content acquisition method, comprising:
displaying a media content acquisition page in response to a media content acquisition operation, wherein a preset display area of the media content acquisition page comprises an effect presentation bar in an inactivated state, the effect presentation bar comprising at least one effect content displayed in a preset target layout;
switching the effect presentation bar from the inactivated state to an activated state in response to a preset trigger operation by a user on the effect presentation bar;
determining a target effect currently selected by the user; and
performing the media content acquisition operation based on the target effect.

2. The method according to claim 1, wherein the switching the effect presentation bar from the inactivated state to an activated state in response to a preset trigger operation by a user on the effect presentation bar comprises at least one of:
in response to a trigger operation by the user on an effect control in the preset display area, switching the effect presentation bar from the inactivated state to an activated state, the preset effect control being included in the media content acquisition page;
in response to a first slide operation triggered by the user in the preset display area, switching the effect presentation bar from the inactivated state to an activated state;
in response to a trigger operation by the user on a preset position in the preset display area, switching the effect presentation bar from the inactivated state to an activated state; or
in response to a second slide operation by the user on a framed area of the media content acquisition page, switching the effect presentation bar from the inactivated state to an activated state.

3. The method according to claim 1 or 2, wherein the determining a target effect currently selected by the user comprises:
determining a target effect currently selected by the user in response to a switching operation triggered by the user on the at least one effect content in the effect presentation bar in the activated state; or
determining, as the target effect content, a preset effect content in the at least one effect content in the effect presentation bar in the activated state.

4. The method according to any one of claims 1-3, further comprising:
displaying, in response to a preset trigger operation by the user on the effect presentation bar, the display effect corresponding to the preset effect content in the at least one effect content in a framed area of the media content acquisition page.

5. The method according to any one of claims 1-4, wherein the determining a target effect currently selected by the user comprises:
switching the effect content currently displayed in the effect presentation bar in response to a first slide operation triggered by the user in the media content acquisition page; and
determining, in response to the user stopping the first slide operation, the effect content corresponding to a preset display position in the effect presentation bar as the target effect.

6. The method according to claim 5, wherein the switching the effect content currently displayed in the effect presentation bar in response to a first slide operation triggered by the user in the media content acquisition page comprises:
in response to a first slide operation triggered by the user in the effect presentation bar, switching the effect content currently displayed in the effect presentation bar at a preset first switching speed; and
in response to a first slide operation triggered by the user in a framed area of the media content acquisition page, switching the effect content currently displayed in the effect presentation bar at a preset second switching speed,
wherein the first switching speed is different from the second switching speed.

7. The method according to any one of claims 1-6, wherein after the switching the effect presentation bar from the inactivated state to an activated state in response to a preset trigger operation by a user on the effect presentation bar, the method further comprises:
displaying a preset effect panel in response to a trigger operation by the user on the effect control, wherein a plurality of effect contents are included in the effects panel, and a layout mode of the plurality of effect contents is different from a target layout mode in the effect presentation bar.

8. The method according to any one of claims 1-6, wherein the method further comprises:
displaying a preset effect panel in response to a third slide operation triggered by the user in the effect presentation bar when the effect presentation bar is in an inactivated state, wherein a plurality of effect contents are included in the effects panel, and a layout mode of the plurality of effect contents is different from a target layout mode in the effect presentation bar; or
displaying a preset effect panel in response to a fourth slide operation triggered by the user in the effect presentation bar when the effect presentation bar is in an activated state, wherein a plurality of effect contents are included in the effects panel, and a layout mode of the plurality of effect contents is different from a target layout mode in the effect presentation bar.

9. The method according to any one of claims 1-6, wherein the displaying a media content acquisition page in response to a media content acquisition operation comprises:
displaying the media content acquisition page in response to a trigger operation by the user on a preset content acquisition control in the media content presentation page; and
in the effect presentation bar in the media content acquisition page, displaying the at least one effect content in a preset target layout, the media content presentation page being configured to display a media content stream comprising the at least one media content.

10. A media content acquisition apparatus, comprising:
a display module, configured to display a media content acquisition page in response to a media content acquisition operation, wherein a preset display area of the media content acquisition page comprises an effect presentation bar in an inactivated state, the effect presentation bar comprising at least one effect content displayed in a preset target layout;
a switching module, configured to switch the effect presentation bar from the inactivated state to an activated state in response to a preset trigger operation by a user on the effect presentation bar;
a determination module, configured to determine a target effect currently selected by the user; and
a content acquisition module, configured to perform the media content acquisition operation based on the target effect.

11. An electronic device, comprising: a processor and a memory;
wherein the memory stores computer-executable instructions; and
the processor executes the computer-executable instructions stored in the memory, so that the processor performs the media content acquisition method according to any one of claims 1-9.

12. A computer-readable storage medium on which computer-executable instructions are stored, wherein a processor, when executing the computer-executable instructions, implements the media content acquisition method according to any one of claims 1-9.

13. A computer program product comprising a computer program, wherein the computer program, when executed by a processor, implements the media content acquisition method according to any one of claims 1-9.

14. A computer program which, when executed by a processor, implements the media content acquisition method according to any one of claims 1-9.
